# FASCICULE DE BREVET EUROPEEN

(11) **EP 0 867 253 B1**
(45) Date de publication et mention de la délivrance du brevet: **16.01.2002**
(21) Numéro de dépôt: 98400591.8
(22) Date de dépôt: 12.03.1998
(51) Int. Cl.: B23K 11/30

(54) **Procédé et dispositif pour l'extraction et le chargement des électrodes d'une pince à souder d'un appareil de soudage par points par résistance**
Verfahren und Anlage zum Be- und Entladen von Elektroden einer Punktschweisszange bei einem Widerstandspunktschweissgerät
Method and device for extracting and supplying the electrodes of/to an electrode gun of a resistance spot welding apparatus

(30) Priorité: 26.03.1997 FR 9703807
(43) Date de publication de la demande: 30.09.1998
(73) Titulaire: A.M.D.P., 78870 Bailly (FR)
(72) Inventeur: Auchecorne, Daniel, 92420 Vaucresson (FR); de Gelis, Emmanuel, 78100 Saint Germain En Laye (FR); Petitjean, Alain, 78170 La Celle Saint Cloud (FR)
(74) Mandataire: de Saint-Palais, Arnaud Marie

(56) Documents cités:
- EP-A- 0 267 109
- DE-A- 3 323 038
- FR-A- 2 683 172
- FR-A- 2 738 518
- US-A- 4 649 613
- US-A- 4 794 221
- US-A- 5 073 692
- US-A- 5 495 663

## Description

La présente invention concerne un procédé et un dispositif pour l'extraction et/ou le chargement des électrodes d'une pince à souder d'un appareil de soudage par points par résistance (voir, par exemple, US-A-5 495 663).

Elle s'applique notamment, mais non exclusivement, aux électrodes utilisées dans les appareils de soudage mono ou multipoints montés à poste fixe ou portés par des robots.

Habituellement, ces appareils comprennent deux bras mobiles l'un par rapport à l'autre et portant chacun à l'une de ses extrémités un embout porte-électrode sur lequel vient s'engager à force une électrode.

Lors du soudage, les deux électrodes qui sont connectées à une source d'énergie électrique viennent pincer les deux pièces à souder, de manière à engendrer à l'intérieur de la zone à souder un courant électrique à haute intensité provoquant localement une élévation de température, (par effet Joule) à un niveau correspondant à la température de soudage.

Les électrodes, réalisées en un matériau présentant une haute conductibilité électrique (tel que le cuivre), comprennent chacun un corps tubulaire cylindrique prolongé d'un côté par un embout coaxial terminé par une face d'appui plane ou curviligne destiné à venir porter sur l'une des deux pièces à souder.

Le diamètre intérieur du corps tubulaire est sensiblement complémentaire de celui du support porte-électrode de manière à permettre un engagement conique à force de l'électrode sur le support qui assure une solidarisation des deux pièces et qui garantisse une bonne conduction du courant électrique au niveau de la jonction.

Habituellement, l'embout présente une forme de révolution (par exemple tronconique) allant en se rétrécissant depuis le corps jusqu'à la face d'appui, de manière à faire converger les lignes de courant vers les zones à souder et à obtenir, au niveau de ces zones, la densité de courant souhaitée pour atteindre la température de soudage désirée.

Bien entendu, ces formes sont adaptées à la nature des pièces que l'on désire souder et sont donc variables d'un poste de soudure à un autre.

Il s'avère que ces électrodes de soudure sont le siège d'une usure intense qui provoque rapidement des déformations de l'embout et, en particulier, de la face d'appui. Cette usure est notamment due à l'établissement d'arcs électriques qui se forment entre l'électrode et la pièce et qui finissent par corroder la face d'appui, étant entendu que plus l'électrode est détériorée, plus il se forme des arcs, donc plus la corrosion est intense (avec risque de détérioration des pièces à souder), et moins la qualité de la soudure est bonne.

Pour éviter d'avoir à remplacer trop fréquemment les électrodes, on utilise des appareils permettant de roder les embouts de manière à ce qu'ils retrouvent leur forme avec la précision d'origine.

Généralement, ces appareils font intervenir des têtes de rodage de forme sensiblement cylindrique venant se monter de façon amovible dans une couronne porte-outils couplée à un dispositif d'entraînement en rotation.

Dans le cas où l'appareil est destiné à effectuer un rodage in situ des électrodes (sans démontage de celle-ci) la tête de rodage peut être double de manière à pouvoir traiter à la fois les deux électrodes d'une même pince. Dans ce cas, la tête de rodage comprend deux cavités opposées munies d'arêtes tranchantes dont le profil correspond à celui des embouts que l'on veut roder. Ainsi, lors du rodage, les deux électrodes sont disposées de manière à venir pincer la tête de rodage, les deux embouts venant respectivement s'engager dans les deux cavités. La rotation de la tête de rodage provoque alors un rodage simultané des deux embouts.

Bien entendu, les électrodes ne peuvent subir qu'un nombre limité de rodages, au-delà duquel il devient nécessaire de procéder à leur remplacement. L'opérateur peut alors profiter de cette phase de remplacement pour effectuer un contrôle de la qualité du rodage des électrodes.

Il s'avère que cette phase de remplacement des électrodes est particulièrement délicate du fait qu'elle implique une extraction de l'électrode hors de son support. Or, en général, l'électrode adhère fermement à son support en raison de l'engagement à force initial et ensuite aux effets de soudage par thermocompression exercés lors du soudage. Il est donc fréquemment nécessaire d'exercer sur l'électrode usagée des impacts convenablement orientés pour provoquer son décollage. C'est la raison pour laquelle l'automatisation de cette phase de remplacement est difficilement envisageable.

Néanmoins, on a déjà proposé des solutions permettant d'exercer sur l'électrode des couples d'extraction. Dans ce cas, les électrodes sont amenées une par une sur un poste d'extraction. Outre le fait que cette solution n'est pas toujours efficace, elle présente l'inconvénient d'engendrer sur la pince à souder des contraintes susceptibles de provoquer des détériorations soit sur la pince, soit sur le mécanisme qui lui est associé.

Le document US-A-5 495 663, considéré comme étant l'état de la technique le plus proche, décrit un procédé pour l'extraction en vue de leur remplacement des électrodes d'une pince à souder d'un appareil de soudage par point et par résistance comprenant au moins un porte-électrode sur lequel s'engage à force le corps tubulaire d'une électrode comportant une face annulaire qui délimite avec un épaulement du porte-électrode, une gorge annulaire, cette électrode comprenant un embout comprenant une séquence d'extraction comportant les étapes suivantes :
- la mise en place de l'électrode portée par l'un des bras de la pince dans un poste d'extraction,
- la désolidarisation et la séparation de l'électrode et de son porte-électrode en exerçant sur l'électrode une force de traction, l'électrode étant retenue par le mécanisme d'extraction,
- l'éjection de l'électrode usagée.

L'invention a donc plus particulièrement pour but de supprimer ces inconvénients (voir aussi US-A-5 495 663) en se basant sur les deux constatations suivantes
- L'électrode se termine du côté opposé à l'embout par une face annulaire qui délimite avec un épaulement annulaire du porte-électrode une gorge annulaire.
- La jonction entre le corps tubulaire cylindrique de l'électrode et la forme de révolution de l'embout peut servir de référence pour localiser la gorge annulaire, quel que soit le niveau d'usure de l'électrode.

Compte tenu de ces deux caractéristiques, le procédé selon l'invention comprend une séquence d'extraction comportant les étapes suivantes :
- la mise en place de l'électrode portée par l'un des bras de la pince dans un poste d'extraction en amenant une zone de la forme de révolution adjacente à la susdite jonction, en butée sur une pièce d'appui d'un mécanisme d'extraction,
- la désolidarisation de l'électrode et de son support en engageant à force dans la susdite gorge une pièce d'extraction en forme de coin prenant appui sur ladite face annulaire et sur ledit épaulement,
- la séparation de l'électrode et de son porte-électrode en exerçant sur ce dernier une force de traction l'amenant à effectuer une course de séparation, tandis que l'électrode demeure retenue par la pièce d'extraction,
- l'éjection de l'électrode usagée.

Avantageusement, l'extraction des deux électrodes d'une même pince pourra s'effectuer simultanément au cours d'une séquence comprenant :
- le positionnement des deux électrodes dans un poste d'extraction, par pincement d'une même pièce d'appui et de centrage,
- la désolidarisation des deux électrodes à l'aide de deux pièces d'extraction s'engageant respectivement dans les gorges annulaires délimitées par les deux électrodes,
- la séparation des électrodes de leurs porte-électrodes en exerçant un couple d'ouverture sur la pince.

Avantageusement, la phase de désolidarisation pourra en outre comprendre l'application d'un impact sur les pièces d'extraction ainsi, qu'éventuellement, une force de traction exercée sur les porte-électrodes.

Bien entendu, une fois la séquence d'extraction effectuée, une nouvelle électrode pourra être engagée à force sur chaque porte-électrode. Cet engagement pourra s'effectuer simultanément sur les deux supports, en disposant les deux électrodes coaxialement, à proximité l'une de l'autre, avec les embouts en regard l'un vis-à-vis de l'autre, et en refermant la pince au terme d'un déplacement conduisant les deux porte-électrodes à se disposer coaxialement à l'axe des deux électrodes puis à s'engager à force dans celle-ci sous l'effet du couple exercé par la pince.

Par ailleurs, le procédé selon l'invention pourra en outre comprendre une phase préalable de rodage des électrodes et après extraction, une phase de vérification de la qualité du rodage.

Comme précédemment mentionné, l'invention concerne également un appareil pour la mise en oeuvre du procédé d'extraction, de remplacement et éventuellement de rodage conformément au procédé précédemment décrit.

Un mode d'exécution d'un tel appareil sera décrit ci-après, à titre d'exemple non limitatif, avec référence aux dessins annexés dans lesquels :
La figure 1 est une coupe axiale schématique d'une électrode montée sur un porte-électrode solidaire d'un bras d'une pince à souder ;
La figure 2 illustre le principe de fonctionnement d'un dispositif d'extraction utilisable dans le procédé selon l'invention ;
La figure 3 est une vue en coupe transversale du dispositif représenté figure 2 ;
La figure 4 montre l'électrode de la figure 1, ôtée de son porte-électrode ;
Les figures 5 et 6 sont des vues, respectivement de côté et de face, d'un appareil permettant d'effectuer l'extraction, la pose et le rodage d'électrodes ;
Les figures 7 à 12 sont des coupes selon A/A de la figure 5, ces figures montrant une séquence de fonctionnement du dispositif d'extraction des électrodes ;
La figure 13 est une vue de côté du dispositif chargeur d'électrodes ;
La figure 14 est une coupe selon B/B du dispositif représenté figure 13.

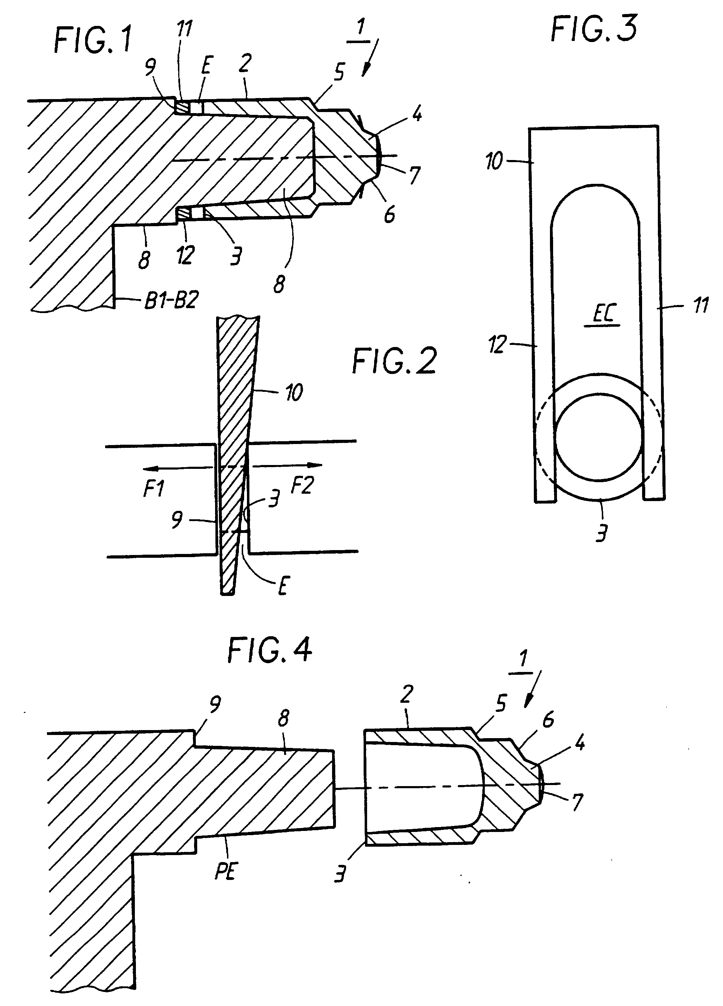

Dans l'exemple illustré sur les figures 1 à 4, l'électrode 1 comprend un corps tubulaire 2, ouvert d'un côté au niveau d'une face radiale annulaire 3 et prolongé, de l'autre côté, par un embout 4 présentant un profil de révolution étagé comportant deux chanfreins successifs 5, 6 se terminant par une forme bombée 7.

Cette électrode 1 est destinée à venir s'engager à force sur l'extrémité cylindrique 8 d'un porte-électrode 8', de diamètre sensiblement égal au diamètre intérieur du corps 2 de manière à obtenir une solidarisation par coincement des deux pièces.

Comme précédemment mentionné, l'invention utilise l'espace E compris entre la face radiale annulaire 3 de l'électrode et un élément de butée 9 (ici un épaulement circulaire) pour effectuer l'extraction de l'électrode 1: Elle propose d'engager dans cet espace E une pièce d'extraction en forme de coin 10, mobile perpendiculairement à l'axe du porte-électrode 8' de manière à pouvoir exercer sur l'électrode 1 et sur ledit porte-électrode 8' deux forces antagonistes F₁, F₂ orientées axialement, de manière à produire un effort d'extraction de l'électrode 1. Bien entendu, la pièce d'extraction 10 pourra présenter une forme de fourche (figure 3) dont les deux branches 11, 12 qui bordent une échancrure centrale EC s'engagent en deux emplacements diamétralement opposés de l'espace E formé entre la face radiale annulaire 3 et l'épaulement 9 circulaire. On obtient ainsi une symétrisation des efforts d'extraction et donc l'annulation du couple de basculement engendré par chacune des branches 11, 12 et qui serait susceptible de provoquer un coincement de l'électrode 1 sur le porte-électrode 8'.

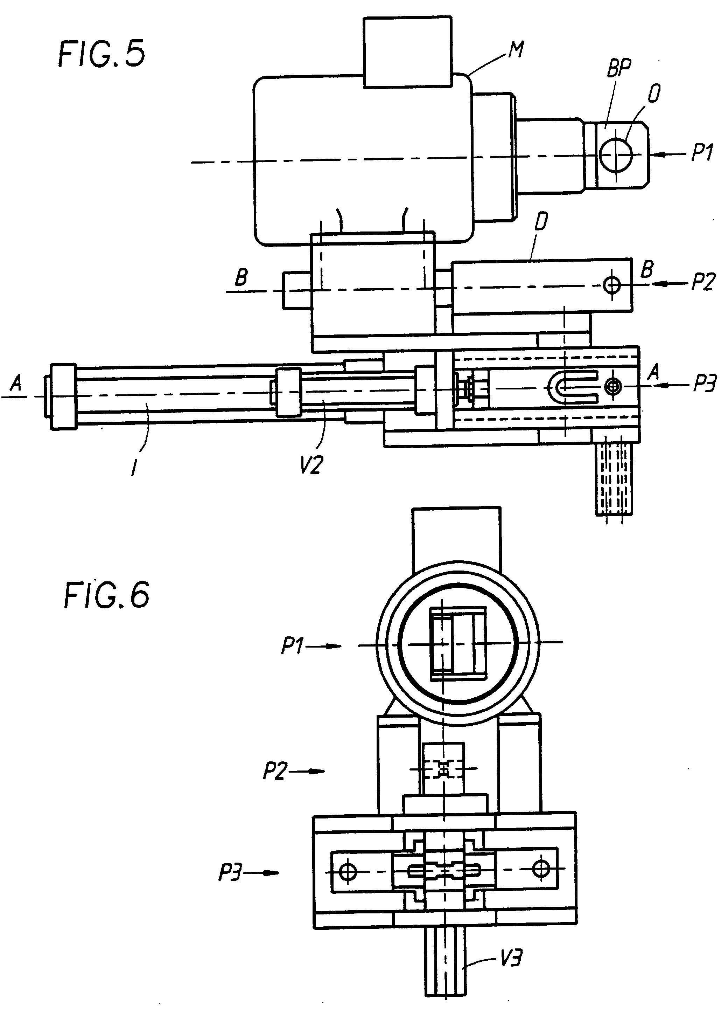

L'appareil d'extraction, de pose et de rodage d'électrodes illustré sur les figures 5 à 13, est plus particulièrement conçu pour traiter simultanément les deux électrodes 1', 1" d'une pince de soudage d'un appareil (par exemple un appareil de soudage automatique) dont seuls les deux bras B₁, B₂ ont été représentés.

Ces deux bras B₁, B₂ sont mobiles l'un par rapport à l'autre et sont actionnés par un mécanisme de manière à pouvoir prendre une position fermée dans laquelle les deux électrodes 1', 1" sont disposées coaxialement l'une par rapport à l'autre, à une distance l'une de l'autre pouvant par exemple correspondre à l'épaisseur des pièces à souder, et une position ouverte dans laquelle les électrodes 1', 1" se trouvent écartées l'une de l'autre. Ce mécanisme est plus particulièrement conçu de manière à exercer des manoeuvres à l'ouverture et la fermeture avec des efforts (extraction, pincement) relativement élevés, en différents emplacements.

Dans cet exemple, l'appareil comprend trois postes de traitement superposés, à savoir : un poste de rodage des électrodes P₁, un poste de mise en place des électrodes sur les porte-électrodes 8' et un poste d'extraction/éjection P₃ des électrodes usagées.

Dans ces trois postes, le traitement s'effectue simultanément sur les deux électrodes 1', 1" de la pince et implique une phase de pincement par les électrodes 1', 1" d'une pièce d'appui éventuellement équipée de moyens de guidage, de centrage et/ou de traitement.

Le poste de rodage P₁ se compose d'un motoréducteur pneumatique ou électrique M dont un pignon de sortie engrène avec une couronne dentée porte-outils montée rotative dans un boîtier parallélépipédique plat BP qui prolonge axialement le corps du motoréducteur M.

Les deux faces principales opposées du boîtier BP sont munies de deux ouvertures O circulaires coaxiales à la roue dentée et de diamètre sensiblement égal au diamètre moyen de cette dernière.

Le boîtier BP se trouve donc traversé de part en part par un passage cylindrique délimité essentiellement par la surface intérieure de la couronne et dans lequel peut venir s'engager une tête de rodage double par exemple du type de celle qui se trouve décrite dans la demande de brevet français No 96 14505 déposée le 22 novembre 1996.

Pour effectuer un rodage des électrodes 1', 1", les électrodes de la pince sont amenées coaxialement, de part et d'autre de la couronne porte-outils (ouverture O). Le serrage effectué par la pince provoque ensuite l'engagement des électrodes 1', 1" au contact des profils tranchants de la tête de rodage. L'entraînement en rotation de la couronne porte-outils provoque ensuite le rodage simultané des deux électrodes.

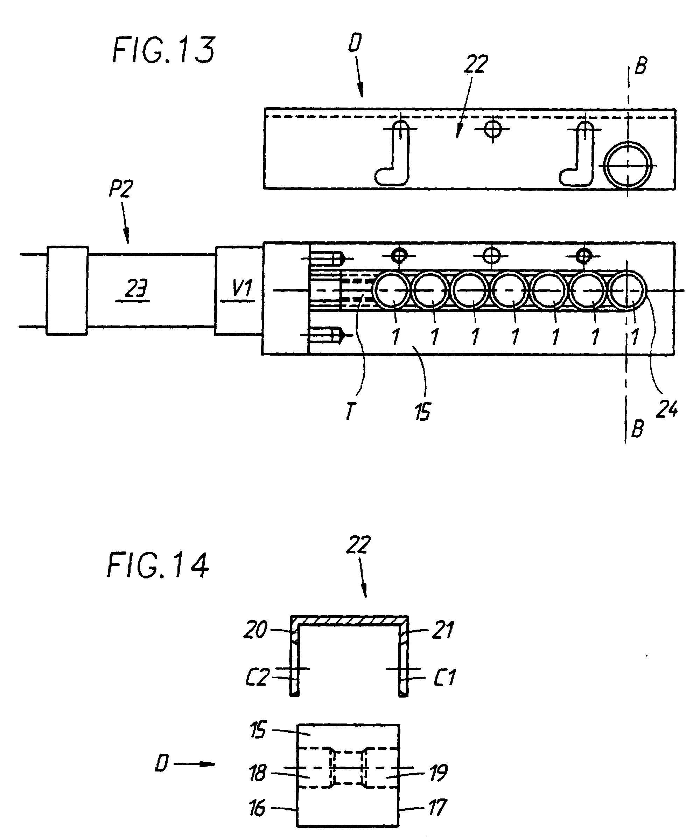

Tel que représenté sur les figures 13 et 14, le poste P₂ de mise en place des électrodes sur les porte-électrodes de la pince se compose d'un double distributeur d'électrodes D comprenant un corps allongé 15 dont les deux faces latérales 16, 17 sont munies de deux concavités parallèles 18, 19 formant glissière dont le profil transversal correspond sensiblement au profil d'une électrode 1. Ces deux concavités 18, 19 sont orientées à l'opposé l'une de l'autre de manière à contenir deux séries d'électrodes coaxiales 1 dont les orifices s'ouvrent vers l'extérieur.

Ces glissières sont refermées par les ailes latérales parallèles 20, 21 d'un capot 22 de section en forme de U qui s'engage sur le corps 15.

A l'intérieur des glissières 18, 19, les deux séries d'électrodes 1 sont respectivement soumises à l'action de deux poussoirs 23 qui exercent chacun une poussée sur l'électrode située à l'une des extrémités d'une série, tandis que l'électrode située à l'autre extrémité de la série vient en appui sur une surface de butée et de centrage 24 du corps 15. Les deux électrodes en appui sur ces surfaces de butée se trouvent disposées coaxialement, au droit d'orifices circulaires coaxiaux C₁, C₂ ménagés dans les deux ailes latérales 20, 21 du capot 22.

Dans cet exemple, chaque poussoir 23 comprend un vérin V₁ dont la tige T se termine par une pièce d'appui incurvée venant en contact avec la première électrode 1 de la série.

Pour effectuer la mise en place d'électrodes 1 sur les deux porte-électrodes de la pince à souder, on dispose tout d'abord la pince de manière à ce que les deux porte-électrodes se disposent coaxialement aux deux orifices C₁, C₂ et à proximité de ces derniers. On commande ensuite la fermeture de la pince. Au cours de cette fermeture, les deux porte-électrodes s'engagent à force simultanément dans les électrodes situées coaxialement aux orifices C₁, C₂ qui se trouvent en appui sur les surfaces de butée 24. Une fois l'engagement réalisé, on procède à l'ouverture de la pince. Au cours de cette ouverture, les deux électrodes 1 demeurent fixées sur les porte-électrodes et se trouvent extraites du distributeur par les orifices C₁, C₂. Les avant-dernières électrodes des deux files viennent alors occuper la place des deux électrodes qui viennent d'être extraites.

L'appareil de mise en place des électrodes se trouve alors prêt pour une réutilisation. Bien entendu, le rechargement des deux glissières peut s'effectuer en ôtant le capot 22 et en rétractant le poussoir associé à la tige T du vérin V₁.

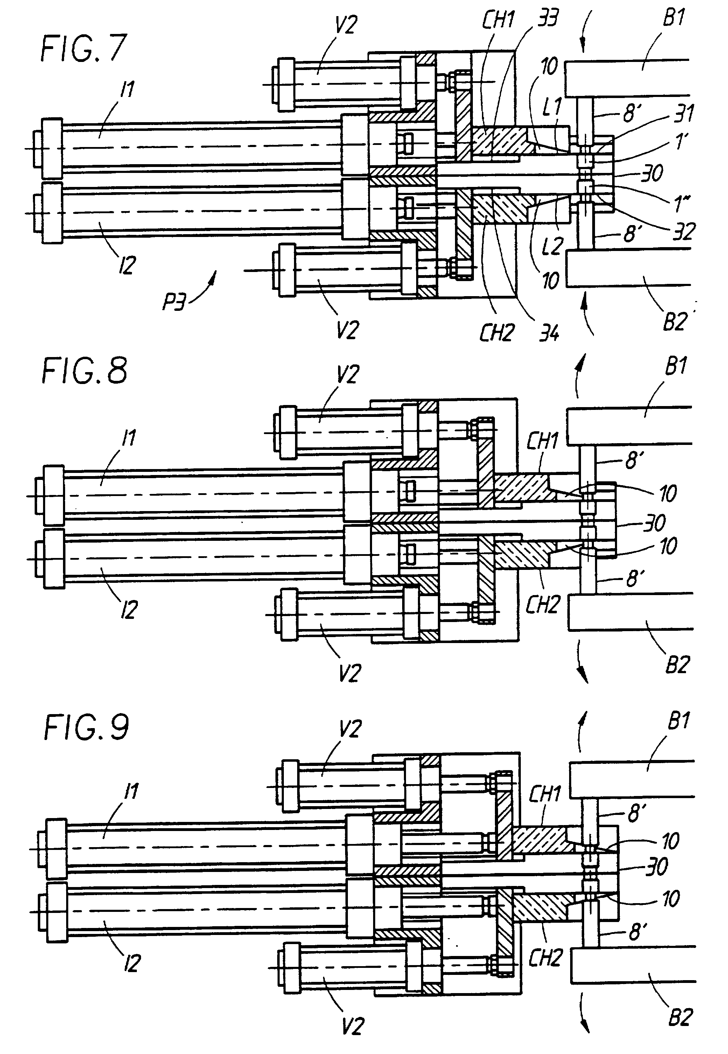

Tel que représenté sur les figures 7 à 12, le dispositif d'extraction des électrodes comprend tout d'abord une structure de centrage et de guidage faisant intervenir :
- une pièce de centrage 30 présentant deux faces latérales parallèles L₁, L₂ dans lesquelles débouchent deux cavités coaxiales 31, 32 dont le profil correspond sensiblement au profil extérieur d'une électrode 1', 1" au moins au niveau de la portion chanfreinée située entre le corps tubulaire 2 et l'embout 4,
- deux glissières 33, 34 axées parallèlement aux deux faces latérales L₁, L₂ dans lesquelles coulissent deux chariots respectifs CH₁, CH₂ portant chacun une pièce d'extraction 10 du type de celle représentée figures 1 à 3. Cette pièce 10 présente une face plane destinée à venir coulisser en appui sur une face latérale correspondante L₁, L₂ et à l'opposé de cette face plane une face oblique. Ces deux faces définissent une forme en coin présentant une échancrure centrale EC sensiblement rectangulaire qui s'étend parallèlement à l'axe des glissières 33, 34 et dont la largeur est sensiblement égale au diamètre intérieur des électrodes 1.

Chacun des chariots CH₁, CH₂ est actionné par un vérin V₂ et peut se déplacer le long des glissières 33, 34 de manière à ce que la pièce d'extraction 10 puisse s'engager de part et d'autre d'une électrode 1 positionnée dans la cavité correspondante 31, 32 de la pièce de centrage 30, dans la gorge formée entre l'électrode 1 et l'épaulement 9 du porte-électrode 8'.

Par ailleurs, le chariot CH₁, CH₂ est disposé dans l'axe d'un impacteur I₁, I₂ conçu de manière à pouvoir exercer un choc à l'arrière du chariot CH₁, CH₂, en direction de la pièce de centrage 30, lorsque la pièce d'extraction 10, engagée dans la gorge exerce un effet de coin entre l'électrode 1 et l'épaulement 9. Ce choc permet de réaliser une désolidarisation entre l'électrode 1 et le porte-électrode 8'.

Les deux cavités 31, 32 communiquent entre elles grâce à un passage dans lequel est disposé un éjecteur EX actionné par un vérin V₃.

Le fonctionnement de l'appareil d'extraction des électrodes 1 sera décrit ci-après en regard des figures 7 à 12.

Dans un premier temps, la pince à souder (bras B₁, B₂) est amenée dans une position telle que les électrodes 1', 1" viennent se disposer coaxialement aux cavités 31, 32. La pince est alors fermée jusqu'à ce que les deux électrodes 1', 1" soient disposées et centrées dans les deux cavités 31, 32. Le profil de ces cavités 31, 32 est conçu de manière à ce que les faces annulaires 3 des électrodes 1, 1' qui sont tenues appuyées par leur chanfrein 5 sur des surfaces chanfreinées correspondantes des cavités 31, 32, arasent le plan des faces latérales L₁, L₂ de la pièce de centrage 30.

Les vérins V₂ sont à l'état rétractés tandis que les pièces d'extraction 10 sont situées à distance des cavités (figure 7). Une fois les électrodes 1', 1" correctement positionnées dans les cavités 31, 32, les deux vérins V₂ sont actionnés de manière à déplacer les chariots CH₁, CH₂ pour engager ainsi la partie en forme de coin de la pièce d'extraction 10 dans la gorge (espace E).

Parallèlement, la pince (bras B₁, B₂), actionnée à l'ouverture, exerce un effort de traction (figure 8) tandis qu'en fin de course des vérins V₂, l'impacteur I vient appliquer un choc sur l'arrière du chariot CH₁, CH₂ (figure 9).

L'effet de cet impact s'ajoute à la traction exercée par la pince et à l'effet de coin exercé par la pièce d'extraction 10 pour provoquer le désassemblage de l'électrode 1', 1" et du porte-électrode PE.

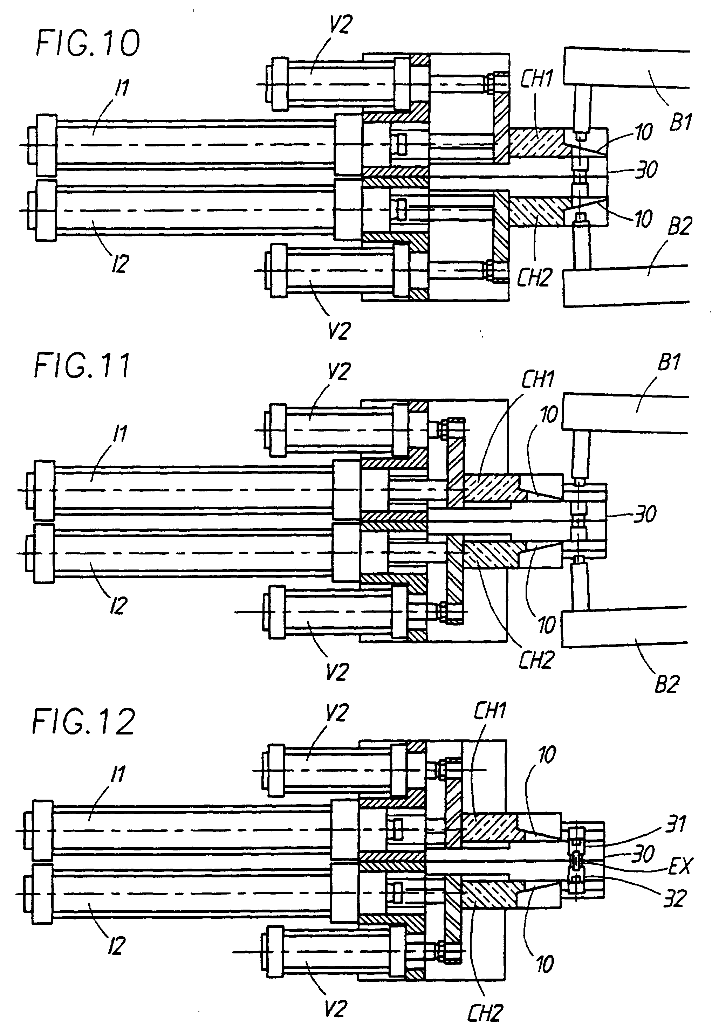

Suite à ce désassemblage, la pince effectue sa course d'ouverture en se dégageant des électrodes qui demeurent retenues par les pièces d'extraction (figure 10).

Une fois la pince en position ouverte, le chariot CH₁, CH₂ ainsi que les impacteurs I retournent en position arrière en libérant les électrodes (figure 11), lesquelles sont alors éjectées grâce à l'éjecteur EX (figure 12).

Les électrodes tombent dans une trémie (non représentée) et sont amenées jusqu'à un poste de contrôle, par exemple grâce à un conduit en vue d'un examen. Cet examen peut notamment avoir pour but de contrôler la qualité du rodage effectué au poste de rodage P₁. Dans ce cas, on procède à un ultime rodage juste avant l'extraction.

Il est clair que grâce aux dispositions précédemment décrites, il est possible d'assurer une maintenance des pinces à souder, avec rodage, remplacement des électrodes et surveillance de la qualité du rodage, sans pratiquement interrompre les cadences de soudage et donc, les cadences de fabrication.

## Revendications

1. Procédé pour l'extraction en vue de leur remplacement des électrodes (1, 1', 1") d'une pince à souder d'un appareil de soudage par point et par résistance comprenant au moins un porte-électrode (8') sur lequel s'engage à force le corps tubulaire (2) d'une électrode (1, 1', 1") comportant une face annulaire (3) qui délimite, avec un épaulement (9) du porte-électrode (8'), une gorge annulaire, ou espace (E), cette électrode (1, 1', 1") comprenant un embout (4) présentant au niveau de sa jonction avec le corps tubulaire (2) une forme de révolution (5),
**caractérisé en ce qu'**il comprend une séquence d'extraction comportant les étapes suivantes :
- la mise en place de l'électrode (1, 1', 1") portée par l'un des bras (B₁, B₂) de la pince dans un poste d'extraction (P₃) en amenant une zone de la forme de révolution (5), adjacente à la susdite jonction, en butée (31, 32) sur une pièce de centrage (30) d'un mécanisme d'extraction,
- la désolidarisation de l'électrode (1, 1', 1") et de son porte-électrode (8') en engageant à force dans la susdite gorge (E) une pièce d'extraction (10) en forme de coin prenant appui sur ladite face annulaire (3) et sur ledit épaulement (9),
- la séparation de l'électrode (1, 1', 1") et de son porte-électrode (8') en exerçant sur ce dernier une force de traction l'amenant à effectuer une course de séparation, tandis que l'électrode (1, 1', 1") demeure retenue par la pièce d'extraction (10),
- l'éjection de l'électrode usagée (1, 1', 1").

2. Procédé selon la revendication 1,
**caractérisé en ce que** l'extraction des deux électrodes (1', 1") d'une même pince à souder s'effectue simultanément au cours d'une séquence comprenant :
- le positionnement des deux électrodes (1', 1") dans un poste d'extraction (P₃), par pincement d'une même pièce d'appui et de centrage (30),
- la désolidarisation des deux électrodes (1', 1") à l'aide de deux pièces d'extraction (10) s'engageant respectivement dans les gorges annulaires (E) délimitées par les deux électrodes (1', 1") et les deux porte-électrodes (8'),
- la séparation des électrodes (1', 1") de leurs porte-électrodes (8') en exerçant un couple d'ouverture sur la pince.

3. Procédé selon l'une des revendications 1 et 2,
**caractérisé en ce que** la phase de désolidarisation comprend en outre l'application d'un impact sur les pièces d'extraction (10).

4. Procédé selon l'une des revendications précédentes,
**caractérisé en ce que** la phase de désolidarisation comprend en outre l'application d'une force de traction sur les porte-électrodes (8').

5. Procédé selon l'une des revendications 2 à 4,
**caractérisé en ce qu'**il comprend en outre une séquence de mise en place d'une nouvelle électrode (1', 1") sur les porte-électrodes (8'), cette séquence comprenant une phase de mise en place de deux électrodes (1', 1") coaxialement, à proximité l'une de l'autre, avec les embouts en regard l'un de l'autre, et une phase de pincement des deux électrodes (1', 1") par les porte-électrodes (8') de la pince de manière à obtenir un engagement à force simultané des deux porte-électrodes (8') dans les deux électrodes (1', 1").

6. Appareil pour la mise en oeuvre du procédé selon l'une des revendications précédentes,
**caractérisé en ce qu'**il comprend un poste d'extraction d'électrodes comportant :
- des moyens de centrage (30) présentant au moins une face dans laquelle débouche une cavité (31, 32) dont le profil correspond au moins partiellement au profil extérieur d'une électrode (1', 1") ;
- au moins une glissière (33, 34) axée parallèlement à ladite face sur laquelle coulisse un chariot (CH₁, CH₂) portant une pièce d'extraction en forme de coin (10) conçue de manière à pouvoir s'engager dans un espace (E) compris entre l'électrode (1', 1") et le porte-électrode (8') au cours de la phase de désolidarisation ; et
- des moyens d'actionnement du chariot (CH₁, CH₂) le long de la glissière (33, 34).

7. Appareil selon la revendication 6,
**caractérisé en ce qu'**il comprend un impacteur (I₁, I₂) apte à exercer un impact sur le chariot (CH₁, CH₂) au cours de la phase de désolidarisation.

8. Appareil selon l'une des revendications 6 et 7,
**caractérisé en ce qu'**il comprend des moyens permettant d'exercer une traction sur le porte-électrode (8') au cours de la phase de désolidarisation.

9. Appareil selon l'une des revendications 6 à 8,
**caractérisé en ce qu'**il comprend un éjecteur (EX) permettant d'éjecter les électrodes (1', 1") de la susdite cavité (31, 32), après leur extraction.

10. Appareil selon l'une des revendications 6 à 9,
**caractérisé en ce que** le poste d'extraction d'électrodes comporte
- la pièce de centrage (30) présentant deux faces parallèles opposées (L₁, L₂) dans lesquelles débouchent respectivement deux cavités coaxiales (31, 32) dans lesquelles les deux électrodes (1', 1") d'une même pince peuvent venir s'engager,
- deux glissières (33, 34) axées parallèlement aux deux faces latérales, sur lesquelles coulissent deux chariots respectifs (CH₁, CH₂) portant chacun une pièce d'extraction en forme de coin (10) conçue de manière à s'engager dans un espace (E) compris entre une électrode (1', 1") et son porte-électrode (8'),
- des moyens d'actionnement simultané des deux chariots (CH₁, CH₂) le long des deux glissières (33, 34).

11. Appareil selon la revendication 10,
**caractérisé en ce qu'**il comprend un éjecteur (EX) situé dans l'espace compris entre les deux cavités (31, 32) de manière à effectuer une éjection simultanée des deux électrodes (1', 1") contenues dans ces deux cavités (31, 32).

12. Appareil selon l'une des revendications 6 à 11,
**caractérisé en ce qu'**il comprend deux impacteurs (I₁, I₂) aptes à appliquer des impacts simultanément sur les deux chariots (CH₁, CH₂) au cours de la phase de désolidarisation.

13. Appareil selon l'une des revendications 6 à 12,
**caractérisé en ce qu'**il comprend en outre un poste (P₂) de mise en place d'électrodes (1', 1") sur les porte-électrodes (8'), comportant un double distributeur d'électrodes (D) maintenant deux électrodes (1', 1") coaxialement en appui sur des moyens de centrage (24), ces électrodes (1', 1") étant orientées de manière à leur permettre de recevoir simultanément les deux porte-électrodes (8') d'une même pince à souder.

14. Appareil selon l'une des revendications 6 à 13,
**caractérisé en ce qu'**il comprend en outre un poste de rodage (P₁) apte à effectuer le rodage simultané des deux électrodes (1', 1") d'une même pince.

## Patentansprüche

1. Verfahren für das Ausziehen von Elektroden (1, 1', 1") von der Schweißzange eines Widerstandspunktschweißgerätes, die mindestens einen Elektrodenhalter (8') besitzt, auf den unter Kraftaufwand der röhrenförmige Korpus (2) einer Elektrode (1, 1', 1") aufgeschoben wird, die eine ringförmige Seite (3) besitzt, die mit einer Schulter (9) des Elektrodenhalters (8') eine ringförmige Nut oder einen ringförmigen Raum (E) begrenzt, wobei diese Elektrode (1, 1', 1") ein Ansatzstück (4) besitzt, das im Bereich der Verbindung mit dem röhrenförmigen Korpus (2) eine gedrehte Form (5) aufweist,
**dadurch gekennzeichnet, dass** es eine Ausziehsequenz beinhaltet, die folgende Phasen umfasst:
- das Positionieren der Elektrode (1, 1', 1"), die von einem der Arme (B₁, B₂) der Schweißzange gehalten wird, in einer Ausziehstation (P₃), indem eine Zone der gedrehten Form (5), die der genannten Verbindungsstelle benachbart ist, anliegend (31, 32) an ein Zentrierstück(30)eines Ausziehmechanismus herangeführt wird.
- die Lösung der Elektrode (1, 1', 1") von ihrem Halter (8'), indem unter Kraftaufwand in den oben genannten Raum (E) ein Auszieher in Form eines Keils (10) eingeführt wird, der auf der genannten ringförmigen Fläche (3) und auf der genannten Schulter (9) aufliegt.
- die Trennung der Elektrode (1, 1', 1") von ihrem Halter (8'), indem auf letzteren eine Zugkraft ausgeübt wird, der letzteren dazu veranlasst, einen Trennungsweg zu vollziehen, während die Elektrode (1, 1', 1") weiterhin vom Auszieher (10) zurückgehalten wird,
- Auswurf der verbrauchten Elektrode (1, 1', 1").

2. Verfahren gemäß Patentanspruch 1,
**dadurch gekennzeichnet, dass** das Ausziehen der beiden Elektroden (1', 1") von ein und derselben Schweißzange simultan im Verlauf einer Sequenz erfolgt, die folgende Phasen einschließt:
- Positionierung der beiden Elektroden (1', 1") in einer Ausziehstation (P₃) durch Festklemmen desselben Auflage- und Zentrierstücks (30),
- Lösen der beiden Elektroden (1', 1") mithilfe von zwei Ausziehern (10), die jeweils in die ringförmigen Nuten (E) eingeführt werden, die von den beiden Elektroden (1', 1") begrenzt werden, von den beiden Elektrodenhaltem (8'),
- Trennen der Elektroden (1', 1") von ihren Elektrodenhaltern (8') durch Ausüben einer Öffnungskraft auf die Schweißzange.

3. Verfahren gemäß einem der Patentansprüche 1 und 2,
**dadurch gekennzeichnet, dass** die Phase des Lösens der Elektroden daneben das Ausüben eines Stoßes auf die Auszieher (10) beinhaltet,

4. Verfahren gemäß einem der vorangegangenen Patentansprüche,
**dadurch gekennzeichnet, dass** die Phase des Lösens der Elektroden daneben die Ausübung einer Zugkraft auf die Elektrodenhalter (8') beinhaltet,

5. Verfahren gemäß einem der Patentansprüche 2 bis 4,
**dadurch gekennzeichnet, dass** es daneben eine Sequenz für das Aufsetzen einer neuen Elektrode (1', 1") auf die Elektrodenhalter (8') beinhaltet, wobei diese Sequenz eine Phase des Aufsetzens von zwei Elektroden (1', 1") beinhaltet, die koaxial und in unmittelbarer Nähe zueinander angeordnet sind, wobei sich die Ansatzstücke gegenüber liegen, und eine Phase des Festklernmens der beiden Elektroden (1', 1") durch die Elektrodenhalter (8') der Schweißzange, um auf diese Weise ein Einführen der beiden Elektrodenhalter (8') unter Kraftaufwand in die beiden Elektroden (1', 1") herbeizuführen.

6. Gerät für die Anwendung des Verfahrens gemäß einem der vorangegangenen Patentansprüche,
**dadurch gekennzeichnet, dass** es eine Station für das Ausziehen von Elektroden beinhaltet, die folgendes einschließt:
- Zentriermittel (30) mit mindestens einer Seite, in der eine Vertiefung (31, 32) mündet, deren Profil mindestens teilweise dem Außenprofil einer Elektrode (1', 1") entspricht;
- mindestens eine Gleitschiene (33, 34), die parallel zu der genannten Seite ausgerichtet ist und auf der ein Wagen (CH₁, CH₂) gleitet, der einen Auszieher in Form eines Keils (10) trägt der so konzipiert ist, das er im Laufe der Lösungsphase in einen Raum (E) eingeschoben werden kann, der zwischen der Elektrode (1', 1") und dem Elektrodenhalter (8') befindlich ist; und
- Mittel für die Betätigung des Wagens (CH₁, CH₂) entlang der Gleitschiene (33, 34).

7. Gerät gemäß Patentanspruch 6,
**dadurch gekennzeichnet, dass** es einen Stößel (I₁, I₂) beinhaltet, der in der Lage ist, während der Lösungsphase einen Stoß auf den Wagen (CH₁, CH₂) auszuüben.

8. Gerät gemäß einem der Patentansprüche 6 und 7,
**dadurch gekennzeichnet, dass** es Mittel beinhaltet, mit denen sich im Verlauf der Lösungsphase ein Zug auf den Elektrodenhalter (8') ausüben lässt.

9. Gerät gemäß einem der Patentansprüche 6 bis 8,
**dadurch gekennzeichnet, dass** es einen Auswerfer (EX) beinhaltet, mit dem sich die Elektroden (1', 1") nach dem Ausziehen aus der oben genannten Vertiefung (31, 32) auswerfen lassen.

10. Gerät gemäß einem der Patentansprüche 6 bis 9,
**dadurch gekennzeichnet, dass** die Elektrodenauszieherstation folgendes einschließt:
- das Zentrierstück (30) mit zwei einander gegenüberliegenden, parallelen Seitenflächen (L₁, L₂), in denen zwei koaxiale Vertiefungen (31, 32) münden, in die die beiden Elektroden (1', 1") ein und derselben Schweißzange eingeführt werden können,
- zwei Gleitschienen (33, 34), die parallel zu den beiden Seitenflächen verlaufen und in denen zwei Wagen (CH₁, CH₂) gleiten, die jeweils einen Auszieher (10) in Form eines Keils tragen, der so konzipiert ist, dass er in den Raum (E) zwischen einer Elektrode (1', 1") und ihrem Elektrodenhalter (8') eingreifen kann,
- Mittel für die simultane Betätigung der beiden Wagen (CH₁, CH₂) entlang der beiden Gleitschienen (33, 34).

11. Gerät gemäß Patentanspruch 10,
**dadurch gekennzeichnet, dass** es einen Auswerfer (EX) beinhaltet, der in dem Raum zwischen den beiden Vertiefungen (31, 32) angeordnet ist, um einen gleichzeitigen Auswurf der beiden Elektroden (1', 1") vorzunehmen, die in den beiden Vertiefungen (31, 32) enthalten sind.

12. Gerät gemäß einem der Patentansprüche 6 bis 11,
**dadurch gekennzeichnet, dass** es zwei Stößel (I₁, I₂) beinhaltet, die in der Lage sind, im Verlauf der Lösungsphase gleichzeitig Stöße auf die beiden Wagen (CH₁, CH₂) auszuüben.

13. Gerät gemäß einem der Patentansprüche 6 bis 12,
**dadurch gekennzeichnet, dass** es daneben eine Station (P₂) für das Aufsetzen von Elektroden (1', 1") auf die Elektrodenhalter (8') beinhaltet, mit einem doppelten Elektrodenspender (D), der zwei Elektroden (1', 1") koaxial auf Zentriermitteln (24) aufliegend festhält, wobei diese Elektroden (1', 1") so ausgerichtet sind, dass gleichzeitig die beiden Elektrodenhalter (8') ein und derselben Schweißzange in sie eingreifen können.

14. Gerät gemäß einem der Patentansprüche 6 bis 13,
**dadurch gekennzeichnet, dass** es daneben eine Reibschleifstation (P₁) einschließt, die in der Lage ist, gleichzeitig die beiden Elektroden (1', 1") ein und derselben Schweißzange zu schleifen.

## Claims

1. Method for extracting and replacing electrodes (1, 1', 1") from the welding tongs of an electrode spot-welded and resistance welding device comprising at least one electrode holder (8') on which forcefully engaged is the tubular body (2) of an electrode (1, 1', 1") comprising an annular face (3) which delimits with a shoulder (9) of the electrode holder (8') an annular recess or gap (E), said electrode (1, 1', 1") comprising a terminal (4) having at the level of its joining point with the tubular body (2) a shape generated by revolution (5), **characterised in that** it includes an extraction sequence comprising the following stages:
- placing the electrode (1, 1', 1") borne by one of the arms (B1, B2) of the tongs in an extraction station (P₃) by bringing a zone of the revolution shape (5) adjacent to said joining point as a stop (31, 32) on a centering element (30) of an extraction mechanism.
- disengaging the electrode (1, 1', 1") and its electrode holder (8') by forcibly engaging in said recess (E) a wedge-shaped extraction element (10) taking support on said annular face (3) and said shoulder (9).
- separating the electrode (1, 1', 1") and its electrode holder (8') by exerting on the latter a tensible force causing it to carry out a separation stroke, whereas the electrode (1, 1', 1") is held by the extraction element (10),
- ejecting the used electrode (1, 1', 1").

2. Method according to claim 1, **characterised in that** extraction of the electrodes (1, 1') of a given pair of welding tongs is carried out simultaneously during a sequence comprising
- the positioning the two electrodes (1, 1') in an extraction station (P₃), by squeezing a given support and centring element (30),
- the disengaging of said two electrodes (1', 1") by means of said two extraction elements (10) being respectively engaged in annular recesses (E) delimited by said two electrodes (1', 1") and said two electrode-holders (8'),
- the separating of said electrodes (1', 1") from their electrode holders (8') by exerting an opening torque on the tongs.

3. Method according to claim 1 or 2, **characterised in that** the disengaging phase moreover comprises applying an impact on the extraction elements (10)

4. Method according to one of the preceding claims, **characterised in that** the disengaging phase moreover comprises applying a tensible force on said electrode-holders (8').

5. Method according to one of claims 2 to 4, **characterised in that** it moreover comprises a sequence for placing a new electrode (1', 1") on said electrode holder (8'), this sequence comprising a phase for coaxially placing two electrodes close to each other with the terminals opposite each other, and a phase for having the two electrodes (1', 1") squeezed by the electrode holders (8') of the tongs so as to simultaneously forcefully engage the two electrode holders (8') in the two electrodes (1', 1").

6. Device for implementing the method according to one of the preceding claims, **characterised in that** it includes an electrode extraction station comprising:
- centering means (30) having at least one face into which opens is a cavity (31, 32) whose profile corresponds at least partially to the external profile of an electrode (1',1");
- at least one sliding rail (33, 40) centred parallel to said face on which slides is a carriage (CH₁, CH₂) bearing a wedge-shaped extraction element (10) designed so as to be able to be engaged in a gap (E) between the electrode (1', 1") and the electrode holder (8') during the disengaging phase ; and
- means for driving the carriage (CH₁, CH₂) along the sliding rail (33, 34).

7. Device according to claim 6, **characterised in that** it includes an impact separator (I₁,I₂,) able to exert an impact on the carriage (CH₁, CH₂) during the disengaging phase .

8. Device according to one of claims 6 and 7, **characterised in that** it includes means exerting traction on the electrode holder (8') during the disengaging phase.

9. Device according to one of claims 6 to 8, **characterised in that** it includes an ejector (EX) for ejecting the electrodes (1', 1") from said cavity (31, 32) after their extraction.

10. Device according to one of claims 6 to 9, **characterised in that** the electrode extraction station comprises :
- the centering element (30) having two parallel opposing faces (L₁, L₂) into which respectively open are two coaxial cavities (31, 32) in which said two electrodes (1', 1") of a given pair of tongs can be engaged,
- two sliding rails (33, 34) centred parallel to the two lateral faces on which slide two respective carriages (CH₁, CH₂) each bearing a wedge-shaped extraction element (10) designed so as to be engaged in the gap (E) between the electrode (1', 1") and its electrode holder (8'),
- means for simultaneously driving two carriages (CH₁, CH₂) along said two sliding rails (33, 34).

11. Device according to claim 10, **characterised in that** it comprises an ejector (EX) located in the gap between the two cavities (31, 32) so as to simultaneously eject the two electrodes (1', 1") contained in said two cavities (31, 32).

12. Device according to one of claims 6 to 11, **characterised in that** it includes two impactor separators (I₁, 1₂) able to simultaneously apply impacts on the two carriages (CH₁, CH₂) during the disengaging phase.

13. Device according to one of claims 6 to 12, **characterised in that** it includes moreover a station (P₂) for placing the electrodes (1', 1") on the electrode holders (8'), comprising a double electrode distributor (D) keeping two electrodes (1', 1") coaxially in support on centring means (24), said electrodes (1', 1") being oriented so as to simultaneously receive the two electrode holders (8') of a given pair of welding tongs.

14. Device according to one of claims 6 to 13, **characterised in that** it further comprises a honing station (P₁) able to simultaneously hone the two electrodes (1', 1") of a given pair of tongs.
